# FASCICULE DE BREVET EUROPEEN

(11) **EP 0 582 499 B1**
(45) Date de publication et mention de la délivrance du brevet: **10.01.1996**
(21) Numéro de dépôt: 93401802.9
(22) Date de dépôt: 12.07.1993
(51) Int. Cl.: B60J 10/00

(54) **Joint d'étanchéité entre porte et pare-brise de véhicule**
Gummidichtung zwischen Tür und Frontscheibe eines Fahrzeugs
Weatherstrip between door and windscreen of a vehicle

(30) Priorité: 06.08.1992 FR 9209794
(43) Date de publication de la demande: 09.02.1994
(73) Titulaire: AUTOMOBILES PEUGEOT, F-75116 Paris (FR); AUTOMOBILES CITROEN, F-92200 Neuilly-sur-Seine (FR)
(72) Inventeur: Passignani, Hubert, F-78600 Maisons Laffitte (FR)
(74) Mandataire: Fabien, Henri

(56) Documents cités:
- EP-A- 0 102 556
- DE-U- 8 815 886
- PATENT ABSTRACTS OF JAPAN vol. 8, no. 234 (M-334)(1671) 26 Octobre 1984 & JP-A-5901140124 (NISSAN JIDOSHA) 2 Juillet 1984

## Description

La présente invention se rapporte d'une manière générale aux joints d'étanchéité et concerne plus particulièrement un joint d'étanchéité entre porte et pare-brise de véhicule automobile.

On a déjà proposé des joints d'étancheité susceptibles de relier un montant de la caisse d'un véhicule à un bord latéral du pare-brise et au bord avant voisin d'une porte du véhicule.

On connaît ainsi des joints qui comprennent une armature métallique s'étendant le long du montant de caisse et présentant en section transversale grossièrement la forme d'un U dont la base est fixée audit montant, dont l'une des branches porte un profilé en élastomère à lèvre appliquée sur le bord du pare-brise et dont l'autre branche porte un profilé en élastomère à lèvre appliquée sur le bord de la porte.

Toutefois, ces joints d'étanchéité connus présentent un certain nombre d'inconvénients parmi lesquels il faut citer la difficulté et le coût de fabrication, ainsi que la complexité de structure et d'aspect du joint tenant au fait que ledit joint doit en réalité être constitué de plusieurs joints distincts pour pouvoir remplir correctement les différentes fonctions d'étanchéité vis-à-vis du pare-brise et de la porte du véhicule.

La présente invention a notamment pour but de remédier aux inconvénients ci-dessus en proposant un joint d'étanchéité facile à fabriquer, peu coûteux, d'une structure unitaire, facile à monter sur le montant de caisse, et d'un aspect propre à se confondre avec le profil de la carrosserie.

A cet effet, l'invention a pour objet un joint d'étanchéité reliant un montant de la caisse d'un véhicule à un bord latéral du pare-brise et au bord avant voisin d'une porte de véhicule, et du type comprenant une armature métallique s'étendant le long du montant et présentant en section transversale grossièrement la forme d'un U dont la base est fixée au montant, dont l'une des branches ou première branche porte un profilé en élastomère à lèvre appliquée sur le bord du pare-brise et dont l'autre branche ou deuxième branche porte un profilé en élastomère à lèvre appliquée sur le bord de la porte, caractérisé en ce que les deux profilés en élastomère forment une pièce unique obtenue par extrusion sur l'armature.

Selon un mode de réalisation ce l'invention, les deux profilés sont reliés par une membrane recouvrant l'armature, tandis que la deuxième branche du U reçoit de façon amovible le profilé en élastomère correspondant qui présente une forme de pince.

Suivant un mode de réalisation préféré, le profilé précité en forme de pince s'accroche sur la deuxième branche du U qui est soit nue soit enrobée d'élastomère comme toute l'armature.

Suivant encore un autre mode de réalisation de l'invention, le profilé en élastomère porté par la première branche du U comporte une seconde lèvre appliquée sur le bord avant de la porte.

Mais d'autres caractéristiques et avantages de l'invention apparaîtront mieux dans la description détaillée qui suit et se réfère aux dessins annexés, donnés uniquement à titre d'exemple, et dans lesquels :
- la figure 1 est une vue partielle et en perspective d'un véhicule et illustre la partie du véhicule comportant le pare-brise ;
- la figure 2 est une vue en coupe, agrandie, suivant la ligne II-II de la figure 1 ;
- la figure 3 est une vue du joint d'étanchéité illustré par la figure 2, mais montré ici isolé, c'est-à-dire non fixé sur le montant de la caisse du véhicule; et
- les figures 4 et 5 illustrent respectivement deux variantes de réalisation de ce joint.

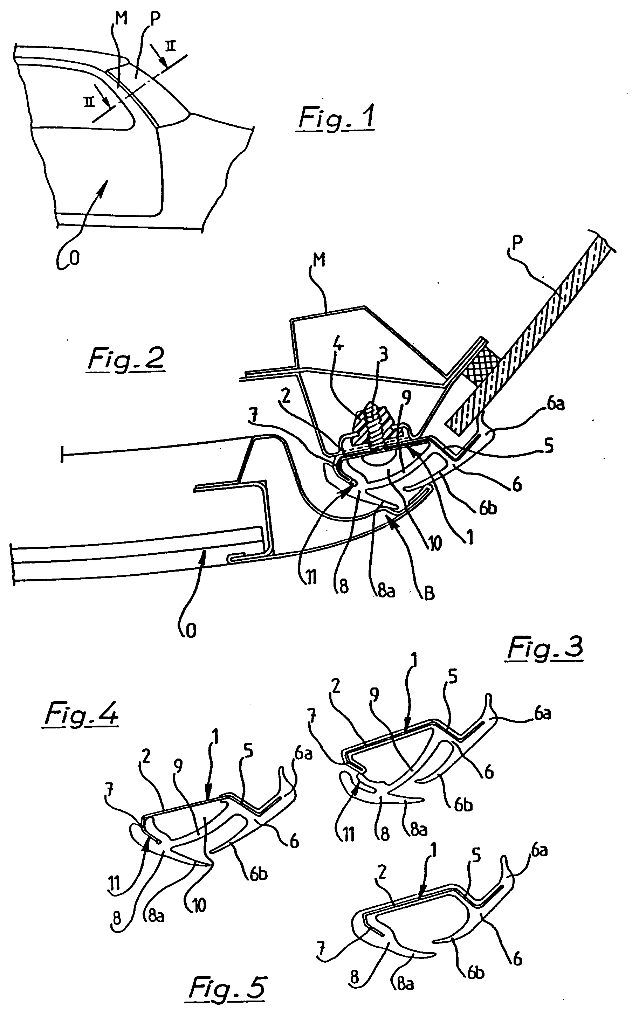

Un joint d'étanchéité selon cette invention est destiné à relier un montant M de baie ou de caisse d'un véhicule automobile à un bord latéral du pare-brise P et au bord avant voisin B d'une porte O du véhicule, comme cela est bien visible sur les figures 1 et 2.

Suivant la réalisation visible sur les figures 2 et 3, le joint d'étanchéité selon cette invention comprend une armature métallique en aluminium ou autre 1 s'étendant le long du montant M et présentant en section transversale grossièrement la forme d'un U dont la base 2 est fixée au montant M au moyen par exemple de vis 3 et d'agrafes 4, comme on le voit bien sur la figure 2, étant bien entendu que tout mode de fixation autre que celui représenté peut parfaitement être utilisé sans sortir du cadre de l'invention.

Le U de l'armature 1 comporte des ailes ou branches, à savoir d'une part une première branche 5 portant un profilé en élastomère 6 avec une lèvre 6a appliquée sur le bord du pare-brise P, et une autre lèvre 6b pouvant s'appliquer sur le bord avant B de la porte O, comme cela est bien visible sur la figure 2, et d'autre part, une deuxième aile ou branche 7 portant elle aussi un profilé en élastomère 8 avec lèvre 8a susceptible de s'appliquer sur le bord avant B de la porte O du véhicule.

Suivant une caractéristique essentielle de l'invention, les deux profilés en élastomère 6 et 8 avec leurs lèvres associées 6a, 6b et 8a forment une pièce unique réalisée par extrusion sur l'armature 1.

Comme il apparaît clairement sur les figures 2 et 3, ainsi d'ailleurs que sur la figure 4 illustrant une autre réalisation de joint d'étanchéité conforme à cette invention, les deux profilés 6 et 8 sont reliés par une membrane 9 recouvrant en quelque sorte l'armature 1 et formant avec elle une gouttière ou un canal 10.

Dans la réalisation illustrée par les figures 2 et 3 d'une part, et par la figure 4 d'autre part, la deuxième aile ou branche 7 du U de l'armature 1 reçoit de façon amovible le profilé en élastomère 8 conformé à la manière d'une pince comme cela a été repéré en 11. Ainsi, comme on le comprend des figures 2 et 3, la pince 11 pourra être accrochée sur la branche 7 du U de l'armature pour ainsi fermer la gouttière 1O et cacher la fixation 3, 4. Néanmoins, afin d'accéder à cette fixation pour le montage ou le démontage de l'armature, la pince 11 pourra être facilement extraite de la branche 7.

Dans la réalisation des figures 2 et 3, la branche 7 est enrobée d'élastomère tout comme l'embase 2 de l'armature qui, finalement, est complètement enrobée de matériau élastomère.

Dans la variante de la figure 4, la branche 7 est nue, c'est-à-dire n'est pas enrobée de matériau élastomère, de même que l'embase 2 du U de l'armature.

Ainsi, dans la réalisation des figures 2 et 3, la pince 11 pourra être extrudée en position ouverte, ou bien, dans le cas de la réalisation de la figure 4, la branche 7 pourra ne pas recevoir de primaire d'accrochage, c'est-à-dire de produit imprégnant l'armature avant extrusion pour provoquer l'adhérence de l'élastomère.

La variante visible sur la figure 5 est plus simple que les précédentes, en ce sens qu'ici toute l'armature 1 est certes enrobée de matériau élastomère, mais il n'est pas prévu de membrane telle que 9 reliant tes deux profilés en élastomère 6 et 8, et le profilé en élastomère 8 ne forme pas une pince détachable de l'armature 1 puisqu'il est intégral à ladite armature en venant d'extrusion sur elle.

Dans toutes les variantes de joint d'étanchéité décrites ci-dessus, le joint d'étanchéité conforme à cette invention forme une pièce unique par le fait que les profilés en élastomère viennent d'extrusion avec l'armature métallique pour former un ensemble qui est par la suite cintré et galbé pour suivre les formes de la carrosserie du véhicule et ainsi intégrer à lui seul des fonctions de finition latérale du pare-brise P, d'anti-salissure latérale dudit pare-brise, d'étanchéité avec la porte du véhicule (lèvres 6b, 8a), et aussi de cache-fixation (membrane 9).

Dès lors, les avantages d'un tel joint seront nombreux et à cet égard on peut citer un gain de prix dû à l'intégration des fonctions, un bel aspect de l'extérieur dû à un nombre moindre de pièces et d'accostages, et une plus grande précision des accostages joint-pare-brise et joint - porte.

Bien entendu, l'invention n'est nullement limitée aux modes de réalisation décrits et illustrés qui n'ont été donnés qu'à titre d'exemple. C'est ainsi que la forme des lèvres appartenant aux deux profilés d'élastomère peut être quelconque et appropriée en fonction de la carrosserie du véhicule à équiper.

## Revendications

1. Joint d'étanchéité reliant un montant (M) de la caisse d'un véhicule à un bord latéral du pare-brise (P) et au bord avant voisin (B) d'une porte (O) du véhicule, et du type comprenant une armature métallique (1) s'étendant le long du montant (M) et présentant en section transversale grossièrement la forme d'un U dont la base (2) est fixée au montant (M), dont l'une des branches ou première branche (5) porte un profilé en élastomère (6) à lèvre (6a) appliquée sur le bord du pare-brise (P), et dont l'autre branche ou deuxième branche (7) porte un profilé en élastomère (8) à lèvre (8a) appliquée sur le bord (B) de la porte (O), caractérisé en ce que les deux profilés en élastomère (6,8) forment une pièce unique obtenue par extrusion sur l'armature (1).

2. Joint selon la revendication 1, caractérisé en ce que les deux profilés en élastomère (6,8) sont reliés par une membrane (9) recouvrant l'armature (1) et la deuxième branche du U (7) reçoit de façon amovible le profilé en élastomère correspondant (8) qui présente une forme de pince (11).

3. Joint selon la revendication 2, caractérisé en ce que le profilé précité (8) en forme de pince (11) s'accroche sur la deuxième branche (7) du U qui est soit nue soit enrobée d'élastomère comme toute l'armature.

4. Joint selon l'une des revendications précédentes, caractérisé en ce que le profilé en élastomère (6) porté par la première branche (5) du U comporte une seconde lèvre (6b) appliquée sur le bord avant (B) de la porte (O).

## Claims

1. A seal connecting an upright (M) of a vehicle body to a lateral edge of the windscreen (P) and to the adjacent front edge (B) of a door (O) of the vehicle, said seal being of the type comprising a metal reinforcement (1) extending along the upright (M) and having a roughly U-shaped cross section, the base (2) of the U being fastened to the upright (M), one of the branches or the first branch (5) of the U supporting an elastomer profile (6) with a lip (6a) applied against the edge of the windscreen (P), and the other branch or second branch (7) supporting an elastomer profile (8) with a lip (8a) applied against the edge (B) of the door (O), characterised in that both elastomer profiles (6, 8) form a single piece obtained by extrusion over the reinforcement (1).

2. A seal according to Claim 1, characterised in that the two elastomer profiles (6, 8) are connected by a membrane (9) covering the reinforcement (1) and the second branch of the U (7) receives the corresponding elastomer profile (8), which is shaped like a pincer (11), such that said profile is removable.

3. A seal according to Claim 2, characterised in that the aforementioned profile (8), shaped like a pincer (11), hooks on to the second branch (7) of the U which is either bare or covered with elastomer, like the reinforcement.

4. A seal according to one of the preceding claims, characterised in that the elastomer profile (6) supported by the first branch (5) of the U comprises a second lip (6b) applied against the front edge (B) of the door (O).

## Patentansprüche

1. Dichtung, die eine Säule (M) des Rahmens eines Fahrzeugs mit einem Seitenrand der Frontscheibe (P) und mit dem naheliegenden vorderen Rand (B) einer Tür (O) des Fahrzeugs verbindet, und vom Typ ist, mit einer metallischen Armatur (1), die sich entlang der Säule (M) erstreckt und im Querschnitt grob die Form eines U aufweist, dessen Basis (2) an der Säule (M) befestigt ist, von dem einer der Arme oder der erste Arm (5) ein Elastomerprofil (6) mit Lippen (6A) trägt, die am Rand der Frontscheibe (P) anliegen, und dessen anderer Arm oder zweiter Arm (7) ein Elastomerprofil (8) mit Lippen (8a) trägt, die am Rand (B) der Tür (O) anliegen, dadurch gekennzeichnet, daß die beiden Elastomerprofile (6, 8) ein einziges Teil bilden, das durch Extrusion auf die Armatur (1) erhalten wird.

2. Dichtung nach Anspruch 1, dadurch gekennzeichnet, daß die beiden Elastomerprofile (6, 8) durch eine Membran (9) verbunden sind, die die Armatur (1) bedeckt, und der zweite Arm des U (7) auf entfernbare Weise das entsprechende Elastomerprofil (8) aufnimmt, das eine Zangenform (11) aufweist.

3. Dichtung nach Anspruch 2, dadurch gekennzeichnet, daß das vorgenannte Profil (8) in Form einer Zange (11) sich an dem zweiten Arm (7) des U anhängt, das entweder frei ist oder wie die gesamte Armatur mit Elastomer umgeben ist.

4. Dichtung nach einem der vorhergehenden Ansprüche, dadurch gekennzeichnet, daß das Elastomerprofil (6), das von dem ersten Arm (5) des U getragen wird, eine zweite Lippe (6b) aufweist, die an dem vorderen Rand (B) der Tür (O) anliegt.
